# EUROPEAN PATENT SPECIFICATION

(11) **EP 2 224 030 B1**
(45) Date of publication and mention of the grant of the patent: **16.05.2012**
(21) Application number: 08868451.9
(22) Date of filing: 24.12.2008
(51) Int. Cl.: C22C 38/26

(54) **FERRITIC STAINLESS STEEL HAVING EXCELLENT BRAZEABILITY**
FERRITISCHER EDELSTAHL MIT HERVORRAGENDER LÖTBARKEIT
ACIER INOXYDABLE FERRITIQUE AYANT UNE EXCELLENTE APTITUDE AU BRASAGE

(30) Priority: 28.12.2007 JP 2007339732; 02.12.2008 JP 2008307534
(43) Date of publication of application: 01.09.2010
(73) Proprietor: Nippon Steel & Sumikin Stainless Steel Corporation, Chiyoda-ku Tokyo 100-0004 (JP)
(72) Inventor: HIRAIDE, Nobuhiko, Tokyo 100-0004 (JP); KAJIMURA, Haruhiko, Tokyo 100-0004 (JP); DOI, Daiharu, Tokyo 100-0004 (JP); MAEDA, Shigeru, Tokyo 100-0004 (JP)
(74) Representative: Vossius & Partner
(86) International application number: PCT/JP2008/073394
(87) International publication number: WO 2009/084526

(56) References cited:
- EP-A1- 0 306 578
- JP-A- 7 011 394
- JP-A- 7 292 446
- JP-A- 57 060 056
- JP-A- 2000 073 147
- US-A- 4 461 811

## Description

### TECHNICAL FIELD

The present invention relates to ferritic stainless steel which is used as members that are assembled by braze joining. Examples of such members include EGR (Exhaust Gas Recirculation) coolers, oil coolers, heat exchange equipments used in automobiles and various types of plants, aqueous urea solution tanks used in automotive urea SCR (Selective Catalytic Reduction) systems, automotive fuel delivery system components, and the like. These members are generally complex in shape, and many of them are precision parts. As the brazing method, the case of interest is where braze joining is conducted at high temperatures under low oxygen partial pressures, such as Ni braze and Cu braze.

### BACKGROUND ART

In recent years, due to growing awareness of environmental issues, exhaust gas regulations have been further tightened, and initiatives with a view to suppressing carbon dioxide emissions have advanced. In the automotive field, in addition to initiatives from the fuel standpoint such as bioethanol and biodiesel fuels, initiatives have been taken which seek improvements in fuel efficiency by weight-saving measures and by attachment of heat exchangers that conduct heat recovery of exhaust heat, and which install exhaust gas treatment devices such as EGR coolers, DPFs (Diesel Particulate Filters), and urea SCR systems.

Among these, the objective of EGR coolers is to lower combustion temperature and reduce NOₓ which is a harmful gas by cooling engine exhaust gas and subsequently returning it to the intake side for recombustion. For this purpose, thermal efficiency is required in the heat exchanger portion of the EGR cooler, and satisfactory thermal conductivity is desirable. Conventionally, in these members, austenitic stainless steel such as SUS 304 and SUS 316 is used, and assembly is generally conducted by braze joining.

Recently, in order to further lower combustion temperature, there has been a need to seek lower temperatures on the outlet side of the EGR cooler, and circumstances have arisen that also require thermal fatigue properties to be taken into account. In this regard, attention has come to be focused on ferritic stainless steel which has better thermal conductivity, which has a lower thermal expansion coefficient, and which is less expensive, rather than austenitic stainless steel.

Conventionally, as stainless steel for brazing, there are, for example, the following types of steel sheet. US 4 461 811 discloses a ferritic stainless steel which is wettable by brazing and which contains 10·5-13·5 Cr.
Patent Document 1 discloses a precoated braze-covered metal sheet fabricated by conducting suspension of Ni brazing material with organic binders, and conducting spray application onto the surface of a stainless steel sheet, after which heating is conducted. In addition, Patent Document 2 discloses a method for manufacturing a nickel braze-covered stainless steel sheet with excellent self-brazing properties, wherein a stainless steel sheet having regulated surface roughness is coated with Ni brazing material by plasma spraying. In both Patent Documents, stainless steel which is covered in Examples is austenitic stainless steel, and ferritic stainless steel is not particularly disclosed.

Patent Document 3 discloses a ferritic stainless steel for an ammonia-water absorption cycle heat exchanger which has excellent brazeability and which includes 0.08% or less of C, 0.01 to 2.0% of Si, 0.05 to 1.5% of Mn, 0.05% or less of P, 0.01 % or less of S, 13 to 32% of Cr, 3.0% or less of Mo, 0.005 to 0.1% ofAl, 1.0% or less of Ni, 1.0% or less of Cu, and 0.05% or less of Ti. Here, Ti is limited to 0.05% or less, because carbides or nitrides of Ti form a film that inhibits brazing. Furthermore, Table 1 records 18 types of ferritic stainless steel, and the C contents are in a range of 0.031 to 0.032% which are higher values than the C content range of the high-purity ferritic stainless steel that is now generally manufactured.

Patent Document 1: Japanese Unexamined Patent Application, First Publication No. H1-249294
Patent Document 2: Japanese Unexamined Patent Application, First Publication No. 2001-26855
Patent Document 3: Japanese Unexamined Patent Application, First Publication No. H11-236654

### DISCLOSURE OF INVENTION

### PROBLEMS TO BE SOLVED BY THE INVENTION

The present invention aims to provide a ferritic stainless steel having excellent brazeability in the case where brazing is conducted at high temperatures under low oxygen partial pressures, as with Ni braze and Cu braze.

### MEANS TO SOLVE THE PROBLEMS

As a result of diligent study of the effects of alloy elements on brazeability in the case where brazing is conducted at high temperatures under low oxygen partial pressures as with Ni braze and Cu braze in order to resolve the aforementioned problems, the present inventors found that in a ferritic stainless steel, there are upper limits enabling assurance of satisfactory brazeability with respect to the content of Ti which is often added for the purpose of enhancing workability and intergranular corrosion properties, and the content of A1 which is added for the purpose of deoxidation.

Ni brazing and Cu brazing are usually conducted at 1000 to 1100°C in a hydrogen atmosphere or a vacuum on the order of 10⁻³ to 10⁻⁴ torr. Moreover, in the case of Ag brazing, although conditions depend on the type of braze, there are cases where brazing is conducted at 800 to 900°C in a vacuum atmosphere on the order of 10⁻⁴ to 10⁻⁵ torr. However, these conditions are often for cases of ideal conditions such as small-scale experiments, while in the case of using large-scale, mass-production facilities, it is thought that the atmosphere would be inferior in a degree of vacuum or that the atmosphere would have a high dew point due to limitations imposed by the structure of the facilities and requirements of the manufacturing process.

In order to obtain satisfactory brazeability, it is necessary for the molten braze to broadly wet the surface of the stainless steel, and wettability is affected by the surface film that is formed on the stainless steel. In the aforementioned types of atmosphere, even if it is possible to maintain conditions in which oxides of Fe and Cr are reduced, Ti and Al which tend to oxidize more easily than Fe and Cr form oxides. These oxides inhibit the wetting of the braze, and degrades brazeability. What contributes to this type of film formation that inhibits brazeability is solid-soluble Ti and Al, but in the case where they exist as relatively stable nitrides even at brazing temperature, they do not contribute to film formation, and do not inhibit the wetting of braze.

From this standpoint, a study was made of the relation of the Ti content and the Al content to the wettability of braze.

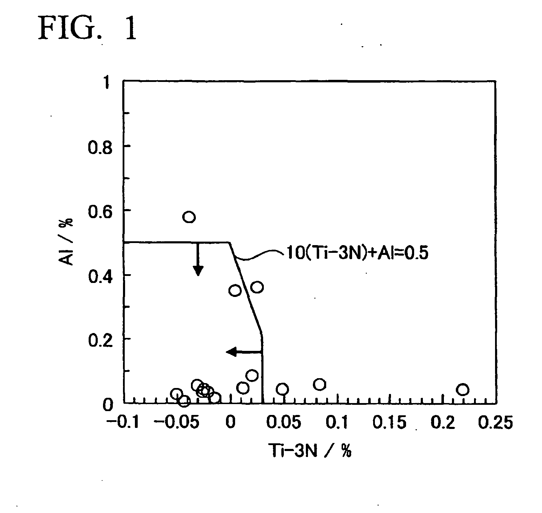

FIG 1 shows the results of evaluation of the wettability of braze under the same test steels and test conditions as the below-mentioned examples. As shown in FIG. 1, it was found that the wettability of braze is satisfactory within a region where, in terms of the mass % of elements, Ti - 3N ≤ 0.03 and Al ≤ 0.5 are satisfied, and 10(Ti - 3N) + Al ≤ 0.5 is further satisfied (here, the atomic symbols in the above formulae indicate the content (mass %) of the respective element, and the numerical values that precede the atomic symbols are constants).

With respect to materials wherein the Ti content and the Al content do not satisfy the aforementioned conditions, analysis of the surface film was conducted after brazing heat treatment. As a result, it was found that an oxide film in which Ti and Al were concentrated was uniformly formed at a thickness of several tens of nm to several hundreds of nm, and it would seem that such film formation inhibits the wetting of braze.

As elements that are similar to Ti and Al in their tendency to oxidize, there are the elements Si, Nb, Ca, and Mg. With respect to these elements, although the phenomenon of concentration in oxide film is observable, they do not achieve a thick and uniform oxide film formation, and do not inhibit the wettability of braze.
Moreover, austenitic stainless steels such as SUS 304 and SUS 316 are used in EGR coolers, but diffusion of elements is quicker in ferrite than in austenite, and oxide film formation is also concomitantly quicker. Therefore, a satisfactory compositional range is limited to a narrower range in ferritic stainless steel.

Among the members for which the stainless steel of the present invention is intended, many members require strength, and it is necessary to inhibit strength reduction after brazing. In particular, in the case where brazing is conducted at high temperatures of 1000 to 1100°C as with Ni brazing and Cu brazing, it is considered important to inhibit the strength reduction associated with crystal grain coarsening. Pinning by precipitates is useful in inhibiting crystal grain coarsening, and it has been found that by fully utilizing carbonitrides of Nb as the precipitate, and by setting the Nb content within a range of 0.03% or more and C + N within a range of 0.015% or more, the precipitation amount and stability of Nb carbonitrides useful in inhibiting crystal grain coarsening are assured.

The present invention is a ferritic stainless steel given by the claim with excellent brazeability that was made based on the aforementioned findings, and a summary thereof is as follows.
The ferritic stainless steel with excellent brazeability of the present invention contains, in terms of mass percent, 0.03% or less of C, 0.05% or less ofN, 0.015% or more of C+N, 0.1 to 1.5% of Si, 0.02 to 2% of Mn, 15 to 22% of Cr, 0.03 to 1% of Nb, and 0.5% or less of Al, and further contains Ti in a content that satisfies the following formulae (1) and (2), with the remainder composed of Fe and unavoidable impurities.

Ti - 3N ≤ 0.03 (1)

10(Ti - 3N) + Al ≤ 0.5 (2)

Here, Ti, N, and Al indicate the contents of the respective elements expressed in mass %.

With respect to the ferritic stainless steel with excellent brazeability of the present invention, one or more selected from the group consisting of, in terms of mass %, 3% or less of Mo; 3% or less ofNi; 3% or less of Cu; 3% or less of V; and 5% or less of W may further be included.

One or more selected from the group consisting of, in terms of mass %, 0.002% or less of Ca; 0.002% or less of Mg; and 0.005% or less of B may further be included.

### EFFECT OF THE INVENTION

A According to the present invention and as given by the claim, it is possible to provide a ferritic stainless steel with excellent brazeability, which is suitable for members that are fabricated by braze joining such as parts of complex shape and precision parts of small size in EGR coolers, oil coolers, heat exchange equipment used in automobiles and various types of plants, aqueous urea tanks used in automotive urea SCR systems, automotive fuel delivery system components, and the like.

### BRIEF DESCRIPTION OF THE DRAWINGS

FIG 1 is a drawing which shows the relation of the wettability of braze to the Ti content and the Al content.

### BEST MODE FOR CARRYING OUT THE INVENTION

The present invention was made based on the aforementioned findings concerning Ti and Al, in particular, as well as Nb and C + N. The chemical composition of steel prescribed by the present invention is explained below in further detail. It should be noted that % signifies mass %.

C: As it lowers intergranular corrosion resistance and workability, it is necessary to suppress its content to a low level. Consequently, it is set to be within a range of 0.03% or less. However, in the case where the C content is excessively lowered, crystal grain coarsening is promoted during brazing, and the cost of refinement is increased. Therefore, it is preferable to set the C content to be within a range of 0.002% or higher, and the C content is more preferably within a range of 0.005 to 0.02%.

N: This is a useful element for pitting corrosion resistance, but it is necessary to lower its content to a low level, because it degrades intergranular corrosion resistance and workability. Consequently, it is set to be within a range of 0.05% or less. However, in the case where the N content is excessively lowered, crystal grain coarsening is promoted during brazing, and the cost of refinement is increased. Therefore, it is preferable to set the N content to be within a range of 0.002% or higher, and the N content is more preferably within a range of 0.005 to 0.03%.

C + N: Given that carbonitrides ofNb inhibits crystal grain coarsening during heating in brazing and strength reduction of the member is inhibited, 0.015% or higher of C + N is required, and 0.02% or higher is preferable. In the case where C and N are excessively added, intergranular corrosion resistance and workability are degraded. Therefore, it is preferable to set the upper limit to be within a range of 0.04% or less.

Si: This is useful as a deoxidizing element, and is also an element that is effective in corrosion resistance, but as it lowers workability, its content is set to be within a range of 0.1 to 1.5%, and the Si content is more preferably within a range of 0.1 to 1%.

Mn: This is useful as a deoxidizing element, but in the case where Mn is excessively included, corrosion resistance is degraded, it is set to be within a range of 0.02 to 2%, and the Mn content is preferably within a range of 0.1 to 1%.

Cr: Examples of assumed corrosive environments include open air environments, cooling water environments, exhaust gas-condensate environments, and the like, and from the standpoint of ensuring corrosion resistance in such environments, at least 15% or more of Cr is required. Corrosion resistance improves as its content increases, but workability and manufacturability decline. Therefore, the upper limit is set to be within a range of 22% or less, and the Cr content is preferably within a range of 15 to 21 %.

Ti: Ti is often added with the objective of fixing C and N, and enhancing intergranular corrosion resistance of welded parts, workability, and the like. However, as mentioned above, Ti is an element which inhibits brazeability, and it is necessary to strictly limit its content including its content as an impurity. Consequently, the Ti content is set to be within a range where the value of Ti - 3N satisfies 0.03% or less, and it is preferable that the value of Ti - 3N be within a range of 0.02% or less. Conversely, as workability is degraded when the Ti content is too low, it is preferable to set the Ti content to be within a range where the value of Ti - 3N satisifies -0.08% or more. In cases where there are no particular requirements for workability and the like, it is also acceptable to omit Ti.

Nb: It is an important element from the standpoint that carbonitrides ofNb inhibits crystal grain coarsening during heating in brazing, and strength reduction of the member is inhibited. Moreover, it is useful in enhancing high-temperature strength and enhancing intergranular corrosion properties of welded parts, and it is necessary to include Nb at a content of 0.03% or more. However, in the case where Nb is excessively added, workability and manufacturability are degraded. Therefore, its upper limit is set to be within a range of 1% or less. The Nb content is preferably within a range of 0.2 to 0.8%, and more preferably within a range of 0.3 to 0.6%. Here, from the standpoint of assuring intergranular corrosion properties, it is preferable that the value of Nb / (C + N) be set to be within a range of 8 or more (the atomic symbols in the aforementioned formula indicate the content (mass %) of the respective element).

Al: This is a useful element in terms of refinement for its deoxidizing effects and the like, and it is also effective in enhancing formability. No particular lower limit is set, but in order to stably obtain these effects, the Al content is preferably within a range of 0.002% or more. However, in the case where the Al content is more than 0.5%, it inhibits brazeability which is the most important property of the present invention. Therefore, the Al content is set to be within a range of 0.5% or less. The Al content is preferably within a range of 0.003 to 0.1%. In the case where deoxidation is accomplished by an element other than Al such as Si, it is acceptable to omit Al.

10(Ti - 3N) + Al ≤ 0.5: In terms of brazeability which is the most important property of the present invention, in order to obtain satisfactory wettability of the braze, as described using FIG. 1, it is necessary to simultaneously satisfy the formula 10(Ti - 3N) + Al ≤ 0.5 and the formula Ti - 3N ≤ 0.03.

The foregoing is the chemical composition that is the basis of the ferritic stainless steel of the present invention. In addition, the following elements may be included as necessary.

Mo: For purposes of enhancing corrosion resistance, it may be included at a content within a range of 3% or less. Stable effects are obtainable when the content is within a range of 0.3% or higher. In the case where Mo is excessively added, workability is degraded, and cost is increased due to its expensiveness. Accordingly, it is preferable that its content be within a range of 0.3 to 3%.

Ni: For purposes of enhancing corrosion resistance, it may be included at a content within a range of 3% or less. Stable effects are obtainable when the content is within a range of 0.2% or higher. In the case where Ni is excessively added, workability is degraded, and cost is increased due to its expensiveness. Accordingly, it is preferable that its content be within a range of 0.2 to 3%.

Cu: For purposes of enhancing corrosion resistance, it may be included at a content within a range of 3% or less. Stable effects are obtainable when the content is within a range of 0.2% or higher. In the case where Cu is excessively added, workability is degraded, and cost is increased due to its expensiveness. Accordingly, it is preferable that its content be within a range of 0.2 to 3%.

V: For purposes of enhancing corrosion resistance, it may be included at a content within a range of 3% or less. Stable effects are obtainable when the content is within a range of 0.2% or higher. In the case where V is excessively added, workability is degraded, and cost is increased due to its expensiveness. Accordingly, it is preferable that its content be within a range of 0.2 to 3%.

W: For purposes of enhancing corrosion resistance, it may be included at a content within a range of 5% or less. Stable effects are obtainable when the content is within a range of 0.5% or higher. In the case where W is excessively added, workability is degraded, and cost is increased due to its expensiveness. Accordingly, it is preferable that its content be within a range of 0.5 to 5%.
From the standpoint of cost and the like, it is preferable that the total content of two or more selected from the group consisting of Mo, Ni, Cu, V, and W be within a range of 6% or less.

Ca: This is a useful element in terms of refinement for its deoxidation effects and the like, and Ca may be included at a content within a range of 0.002% or less. In the case where it is included, it is preferable that the content be within a range of 0.0002% or higher because stable effects are obtainable.

Mg: This is a useful element in terms of refinement for its deoxidation effects and the like, and is also useful in structural refinement, and enhancing workability and toughness. Mg may be included at a content within a range of 0.002% or less. In the case where it is included, it is preferable that the content be within a range of 0.0002% or higher because stable effects are obtainable.

B: This is a useful element in enhancing secondary workability, and B may be included at a content within a range of 0.005% or less. In the case where it is included, it is preferable that the content be within a range of 0.0002% or higher because stable effects are obtainable.

From the standpoint of weldability, it is preferable to set the content of P which is an unavoidable impurity to be within a range of 0.04% or less. From the standpoint of corrosion resistance, it is preferable to set the S content to be within a range of 0.01 % or less.

With respect to the manufacturing method of the stainless steel of the present invention, the general process for manufacturing ferritic stainless steel is acceptable. In general, a molten steel is produced in a converter furnace or electric furnace, the molten steel is refined in an AOD furnace or VOD furnace or the like, and the refined molten steel is made into a slab by the continuous casting method or the ingot-making method. Thereafter, stainless steel is manufactured via the processes of hot rolling, annealing of hot-rolled steel sheet, acid pickling, cold rolling, finish annealing, and acid pickling. As necessary, it is also acceptable to omit annealing of hot-rolled steel sheet, and it is also acceptable to repeatedly conduct cold rolling, finish annealing, and acid pickling.

### EXAMPLES

The implementation possibilities and effects of the present invention are described below in further detail using examples.
Steels with the chemical compositions shown in Table 1 were subjected to casting, and then the steels were subjected to processes of hot rolling, cold rolling, and annealing so as to manufacture cold-rolled steel sheets having a thickness of 0.4 mm.
After cutting out test specimens having a width of 50 mm and a length of 70 mm from these cold-rolled steel sheets, the surfaces of the specimen were subjected to wet polishing using emery paper until #400. Subsequently, Ni braze of 0.1 g was placed on top of the polished surface, and then heating was conducted for 10 minutes at 1100°C under a vacuum atmosphere of 5 ×10⁻³ torr. Then cooling to room temperature was conducted, and the brazing area on the test specimens after heating was measured.

With respect to brazeability, an evaluation of "good" was given when the brazing area after heating was double or more the brazing area before heating, and an evaluation of "bad" was given when it was less than double.
Subsequently, the sectional microstructure of the test specimens after heating was observed. The number of crystal grains existing in the thickness direction was measured across a range of 20 mm length in parallel with the rolling direction. An evaluation of "good" was given when there existed two or more crystal grains in the thickness direction, and an evaluation of "bad" was given when there existed only one.
The test results are shown in Table 2.
In Table 2, Formula (1) is Ti - 3N, and Formula (2) is 10(Ti - 3N) + Al.
Moreover, the underlined parts in Table 1 and Table 2 indicate values outside the range of the present invention.

**Table 1**

| | No. | Chemical Composition (mass %) | | | | | | | | | | |
|---|---|---|---|---|---|---|---|---|---|---|---|---|
| | | C | Si | Mn | P | S | Cr | Ti | Nb | Al | N | Other |
| Inventive example | 1 | 0.012 | 0.42 | 0.15 | 0.028 | 0.0015 | 19.42 | 0.004 | 0.39 | 0.025 | 0.018 | 0.42Cu, 0.32Ni, 0.0010Ca |
| Inventive example | 2 | 0.013 | 0.55 | 0.45 | 0.029 | 0.0008 | 16.58 | 0.002 | 0.55 | 0.004 | 0.015 | 0.32Ni,0.35Cu |
| Inventive example | 3 | 0.006 | 0.12 | 0.19 | 0.022 | 0.0010 | 18.84 | 0.004 | 0.42 | 0.036 | 0.010 | 1.86Mo, 0.0003B |
| Inventive example | 4 | 0.007 | 0.95 | 0.35 | 0.020 | 0.0005 | 13.15 | 0.003 | 0.45 | 0.042 | 0.009 | |
| Inventive example | 5 | 0.016 | 0.25 | 0.18 | 0.029 | 0.0011 | 18.23 | 0.021 | 0.36 | 0.036 | 0.014 | 0.52Cu, 1.02Mo |
| Inventive example | 6 | 0.007 | 0.16 | 0.15 | 0.022 | 0.0008 | 20.25 | 0.012 | 0.22 | 0.015 | 0.009 | 1.03Ni, 1.08Mo |
| Inventive example | 7 | 0.014 | 0.33 | 0.45 | 0.030 | 0.0014 | 18.15 | 0.015 | 0.36 | 0.055 | 0.015 | 2.15W, 0.35V |
| Inventive example | 8 | 0.015 | 0.40 | 0.32 | 0.025 | 0.0019 | 20.88 | 0.042 | 0.40 | 0.046 | 0.010 | 0.34Ni |
| Inventive example | 9 | 0.016 | 0.41 | 0.29 | 0.024 | 0.0016 | 19.19 | 0.066 | 0.42 | 0.086 | 0.015 | 1.88W, 0.0005Mg |
| Inventive example | 10 | 0.018 | 0.39 | 0.33 | 0.023 | 0.0015 | 19.34 | 0.032 | 0.39 | 0.35 | 0.009 | 0.56Ni, 0.38V, 0.0004Ca |
| Comparative example | 11 | 0.008 | 0.18 | 0.15 | 0.026 | 0.0011 | 17.25 | 0.25 | 0.002 | 0.042 | 0.010 | 1.12Mo, 0.0005B |
| Comparative example | 12 | 0.007 | 0.11 | 0.12 | 0.025 | 0.0012 | 18.85 | 0.12 | 0.22 | 0.056 | 0.012 | 1.80Mo, 0.0004B |
| Comparative example | 13 | 0.012 | 0.33 | 0.25 | 0.025 | 0.0012 | 18.22 | 0.004 | 0.35 | 0.58 | 0.014 | 0.29Ni |
| Comparative Example | 14 | 0.010 | 0.42 | 0.36 | 0.026 | 0.0007 | 16.89 | 0.062 | 0.003 | 0.36 | 0.012 | |
| Comparative example | 15 | 0.011 | 0.15 | 0.22 | 0.028 | 0.0009 | 19.12 | 0.073 | 0.25 | 0.041 | 0.008 | 1.90Mo |

**Table 2**

| | No. | Value of formula (1) | Value of formula (2) | Wettability of braze | Microstructure |
|---|---|---|---|---|---|
| Inventive example | 1 | -0.050 | -0.48 | good | Good |
| Inventive example | 2 | -0.043 | -0.43 | good | Good |
| Inventive example | 3 | -0.026 | -0.22 | good | Good |
| Inventive example | 4 | -0.024 | -0.20 | good | Good |
| Inventive example | 5 | -0.021 1 | -0.17 | good | good |
| Inventive example | 6 | -0.015 | -0.14 | good | good |
| Inventive example | 7 | -0.030 | -0.25 | good | good |
| Inventive example | 8 | 0.012 | 0.17 | good | good |
| Inventive example | 9 | 0.021 | 0.30 | good | good |
| Inventive example | 10 | 0.005 | 0.40 | good | good |
| Comparative example | 11 | 0.220 | 2.24 | bad | bad |
| Comparative example | 12 | 0.084 | 0.90 | bad | good |
| Comparative example | 13 | -0.038 | 0.20 | bad | good |
| Comparative example | 14 | 0.026 | 0.62 | bad | bad |
| Comparative example | 15 | 0.049 | 0.53 | bad | good |

With respect to the steels of No. 1 to 10 which were within the ranges of the present invention, the wettability of the braze was satisfactory, and coarsening of crystal grains was inhibited. With respect to the steels of No. 11, No. 12, and No. 15 which satisfied neither Formula (1) nor Formula (2), the steel of No. 13 of which the Al content was outside the range of the present invention, and the steel of No. 14 which did not satisfy Formula (2), the wettability of the braze was in all cases inferior. With respect to the steels of No. 11 and No. 14 of which the Nb content was outside the range of the present invention, conspicuous coarsening of crystal grains was observed.

### INDUSTRIAL APPLICABILITY

The ferritic stainless steel with excellent brazing of the present invention is suitable for members that are fabricated by braze joining as with parts of complex shape and precision parts of compact size such as EGR coolers, oil coolers, heat exchange equipment used in automobiles and various types of plants, aqueous urea tanks in automotive urea SCR systems, automotive fuel delivery system components, and the like.

## Claims

1. A ferritic stainless steel with excellent brazeability comprising, in terms of mass percent, 0.03% or less of C, 0.05% or less of N, 0.015% or more of C + N, 0.1 to 1.5% of Si, 0.02 to 2% of Mn, 15 to 22% ofCr, 0.03 to 1% ofNb, and 0.5% or less of Al, and further comprising Ti in a content that satisfies the following formulae (1) and (2) optionally one or more selected from the group consisting of, in terms of mass %, 3% or less of Mo; 3% or less of Ni; 3% or less of Cu; 3% or less of V; 5% or less of W, 0.002% or less of Ca; 0.002% or less of Mg; and 0.005% or less of B, with the balance being Fe and unavoidable impurities,
Ti - 3N ≤ 0.03 (1)
10(Ti - 3N) + Al ≤ 0.5 (2),
where
the atomic symbols in formulae (1) and (2) indicate the content (mass %) of the respective elements and the numerical values that precede the atomic symbols are constants.

## Patentansprüche

1. Ein ferritischer Edelstahl mit hervorragender Lötbarkeit, umfassend, ausgedrückt als Massenprozent, 0,03% oder weniger C, 0,05% oder weniger N, 0,015% oder mehr C + N, 0,1 bis 1,5% Si, 0,02 bis 2% Mn, 15 bis 22% Cr, 0,03 bis 1% Nb und 0,5% oder weniger Al, und weiter umfassend Ti in einem Gehalt, der die folgenden Formeln (1) und (2) erfüllt, gegebenenfalls eines oder mehrere, ausgewählt aus der Gruppe bestehend aus, ausgedrückt als Massenprozent, 3% oder weniger Mo; 3% oder weniger Ni; 3% oder weniger Cu; 3% oder weniger V; 5% oder weniger W, 0,002% oder weniger Ca; 0,002% oder weniger Mg; und 0,005% oder weniger B, wobei der Rest Fe und unvermeidliche Verunreinigungen sind,
Ti - 3 N ≤ 0,03 (1)
10 (Ti - 3 N) + Al ≤ 0,5 (2),
wobei
die Atomzeichen in den Formeln (1) und (2) den Gehalt (Massen-%) der jeweiligen Elemente angeben und die den Atomzeichen vorangestellten numerischen Werte Konstanten sind.

## Revendications

1. Acier inoxydable ferritique ayant une excellente aptitude au brasage comprenant, en termes de % en masse, 0,03 % ou moins de C, 0,05 % ou moins de N, 0,015 % ou plus de C + N, 0,1 à 1,5 % de Si, 0,02 à 2 % de Mn, 15 à 22 % de Cr, 0,03 à 1 % de Nb et 0,5 % ou moins de Al et comprenant en outre Ti en une teneur qui satisfait les formules (1) et (2) suivantes, éventuellement un ou plusieurs choisis dans le groupe consistant, en termes de % en masse, en 3 % ou moins de Mo ; 3 % ou moins de Ni ; 3 % ou moins de Cu ; 3 % ou moins de V ; 5 % ou moins de W, 0,002 % ou moins de Ca ; 0,002 % ou moins de Mg ; et 0,005 % ou moins de B, le complément étant Fe et des impuretés inévitables,
Ti - 3N ≤ 0,03 (1)
10(Ti - 3N) + Al ≤ 0,5 (2),
où
les symboles atomiques dans les formules (1) et (2) indiquent la teneur (% en masse) des éléments respectifs et les valeurs numériques qui précèdent les symboles atomiques sont des constantes.
